# FASCICULE DE BREVET EUROPEEN

(11) **EP 2 993 435 B1**
(45) Date de publication et mention de la délivrance du brevet: **16.08.2017**
(21) Numéro de dépôt: 15178156.4
(22) Date de dépôt: 23.07.2015
(51) Int. Cl.: F28D 1/03, F28D 9/00, F28D 20/02, H01M 10/625, H01M 10/653, H01M 10/6571, H01M 10/658, H01M 10/659, H01M 10/6556, F28D 20/00, F28D 21/00

(54) **PLAQUE D'ÉCHANGE THERMIQUE POUR GESTION THERMIQUE DE PACK BATTERIES**
WÄRMETAUSCHERPLATTE ZUR THERMISCHEN STEUERUNG VON BATTERIEPAKETEN
HEAT EXCHANGE PLATE FOR THERMAL MANAGEMENT OF A BATTERY PACK

(30) Priorité: 11.08.2014 FR 1457755
(43) Date de publication de la demande: 09.03.2016
(73) Titulaire: VALEO SYSTEMES THERMIQUES, 78320 Le Mesnil Saint-Denis (FR)
(72) Inventeur: AZZOUZ, Kamel, 75012 PARIS (FR); TISSOT, Julien, 92800 PUTEAUX (FR); MARCHADIER, Xavier, 78320 LEVIS SAINT NOM (FR); FERNAND, François, 78000 VERSAILLES (FR); TRAORE, Issiaka, 92400 COURBEVOIE (FR)
(74) Mandataire: Metz, Gaëlle

(56) Documents cités:
- EP-A2- 1 271 085
- WO-A1-2012/045174
- WO-A1-2013/057952

## Description

La présente invention concerne la régulation thermique de batterie et plus particulièrement les plaques d'échange thermique pour la gestion thermique de pack batteries, notamment dans le domaine automobile selon le préambule de la revendication 1.

EP 1 271 085 divulgue une telle plaque d'échange thermique. La régulation thermique des batteries et pack batteries, notamment dans le domaine automobile et encore plus particulièrement des véhicules électriques et hybrides, est un point important car si les batteries sont soumises à des températures trop froides, leur autonomie peut décroitre fortement et si elles sont soumises à des températures trop importantes, il y a un risque d'emballement thermique pouvant aller jusqu'à la destruction de la batterie.

Afin de réguler la température des batteries, il est connu d'ajouter un dispositif de régulation de température du module batterie. Ces dispositifs utilisent généralement des fluides caloporteurs circulant, par exemple au moyen d'une pompe, dans un circuit de conduit, ledit circuit de conduit passant notamment sous ou à l'intérieur d'une plaque d'échange thermique en contact direct avec les batteries.

Les fluides caloporteurs peuvent ainsi absorber de la chaleur émise par la ou les batteries afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites batteries, par exemple s'ils sont reliés à une résistance électrique ou à un chauffage par Coefficient Positif de Température (CTP).

Les fluides caloporteurs généralement utilisés sont l'air ambiant ou des liquides comme par exemple l'eau. Les liquides étant meilleurs conducteurs de chaleur que les gaz, c'est une solution qui est privilégiée car plus efficace.

De façon générale, les plaques d'échange thermique en contact direct avec les cellules sont placées sous les batteries, lesdites batteries reposant ainsi sur lesdites plaques d'échange thermique. Les plaques d'échange thermique sont généralement réalisées en métal et sont composées de deux plaques métalliques embouties et brasées l'une contre l'autre de sorte à former un ou plusieurs circuits de conduits de circulation du fluide caloporteur entre une entrée et une sortie de fluide.

Cependant, entre l'entrée et la sortie de fluide il se crée un différentiel de température qui rend inhomogène ladite température au niveau de la batterie ce qui peut gêner la gestion de la température de la batterie et son maintien à une température de fonctionnement optimal.

Un des buts de l'invention est de proposer une plaque d'échange thermique remédiant au moins partiellement aux inconvénients de l'art antérieur et de proposer une plaque d'échange thermique à homogénéité de température accrue.

La présente invention concerne donc une plaque d'échange thermique pour gestion thermique de pack batteries, comportant des première et seconde plaques, au moins une des première et seconde plaque comportant au moins un canal, les première et seconde plaques étant accolées de sorte que ledit canal délimite en partie au moins un conduit d'un circuit de circulation d'un fluide caloporteur, ladite plaque d'échange thermique comportant en outre au moins un matériau à changement de phase composite.

Ce matériau à changement de phase composite permet d'augmenter l'inertie thermique de la plaque d'échange thermique et permet également d'améliorer l'homogénéité thermique entre l'entrée et la sortie de fluide.

Selon un aspect de l'invention, au moins un matériau à changement de phase composite est en partie placé dans au moins un logement situé dans au moins l'une des première et seconde plaques.

Selon un autre aspect de l'invention, le matériau à changement de phase composite est placé sur au moins une face extérieure de ladite plaque d'échange thermique.

Selon un autre aspect de l'invention, le matériau à changement de phase composite est de forme sensiblement complémentaire à un logement dédié et formé par emboutissage de ladite plaque d'échange thermique de sorte qu'une fois le matériau à changement de phase composite logé dans ledit logement dédié, la surface extérieure de la plaque est approximativement plane.

Le fait d'avoir une surface plane augmente la surface de contact et facilite les échanges thermiques.

Selon un autre aspect de l'invention, la plaque d'échange thermique comporte en outre un dispositif de chauffage additionnel du pack batteries.

Ce dispositif de chauffage additionnel est particulièrement utile pour réchauffer le pack batteries afin qu'il se maintienne ou atteigne plus rapidement sa température de fonctionnement optimal.

Selon un autre aspect de l'invention, le dispositif de chauffage additionnel du pack batteries est un dispositif électrique à résistance sérigraphiée.

Selon un autre aspect de l'invention, le matériau à changement de phase composite est placé entre une des première ou seconde plaques et le dispositif de chauffage additionnel du pack batteries.

Selon un autre aspect de l'invention, l'une d'entre les première et seconde plaques est destinée à venir en contact du pack batteries et que l'autre d'entre les première et seconde plaques comporte sur sa face extérieure un revêtement isolant.

Ce revêtement isolant permet d'améliorer les échanges thermiques entre la plaque d'échange thermique et le pack batteries en limitant les échanges thermique sur la face opposée.

Selon un autre aspect de l'invention, le revêtement isolant est une plaque en matériau isolant accolée à la face extérieure de la plaque n'étant pas au contact du pack batteries.

Selon un autre aspect de l'invention, le revêtement isolant est un traitement de surface isolant appliqué sur la face extérieure de la plaque n'étant pas au contact du pack batteries.

La présente invention concerne également un pack batteries comportant au moins une plaque d'échange thermique comme décrit précédemment.

La présente invention concerne également un ensemble de packs batterie comportant au moins une plaque d'échange thermique comme décrit précédemment, ladite au moins une plaque d'échange thermique étant au contact avec un premier pack batteries sur une première face et au contact avec un second pack batteries sur une seconde face.

Ici, les deux faces de la plaque d'échange thermique sont utilisées pour réguler les packs batteries, limitant ainsi les pertes.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective éclatée d'une plaque d'échange thermique selon un premier mode de réalisation,
- la figure 2 montre une représentation schématique en perspective éclatée d'une plaque d'échange thermique selon un second mode de réalisation,
- la figure 3 montre une représentation schématique en perspective éclatée d'une plaque d'échange thermique selon un troisième mode de réalisation,
- la figure 4 montre une représentation schématique en perspective éclatée d'une plaque d'échange thermique selon un quatrième mode de réalisation,
- la figure 5 montre une représentation schématique en perspective d'un pack batteries,
- la figure 6 montre une représentation schématique en perspective éclatée d'une plaque d'échange thermique selon un cinquième mode de réalisation,
- La figure 7 montre une représentation schématique en coupe d'une plaque d'échange thermique selon un sixième mode de réalisation,
- la figure 8 montre une représentation schématique en perspective d'un ensemble de packs batterie.

Les éléments identiques sur les différentes figures, portent les mêmes références.

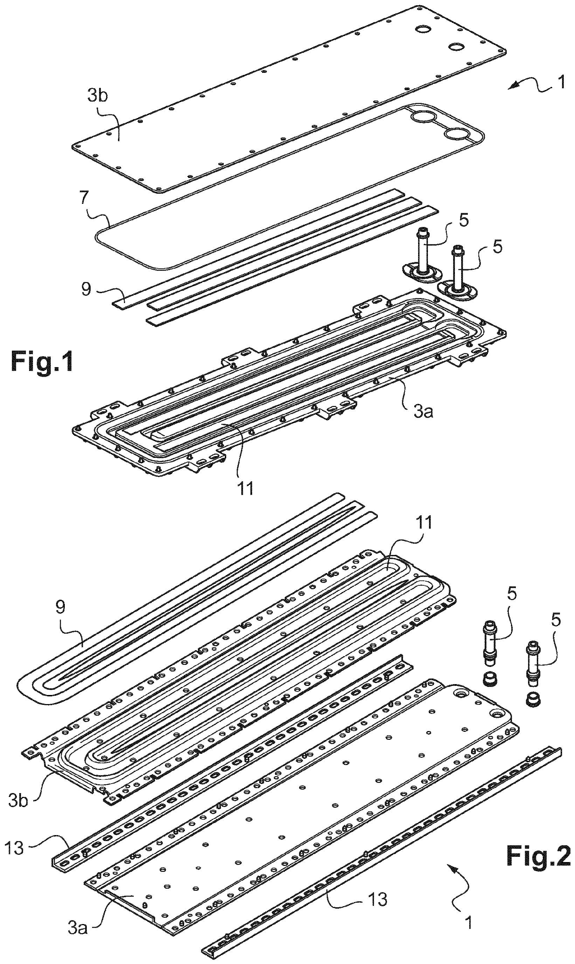

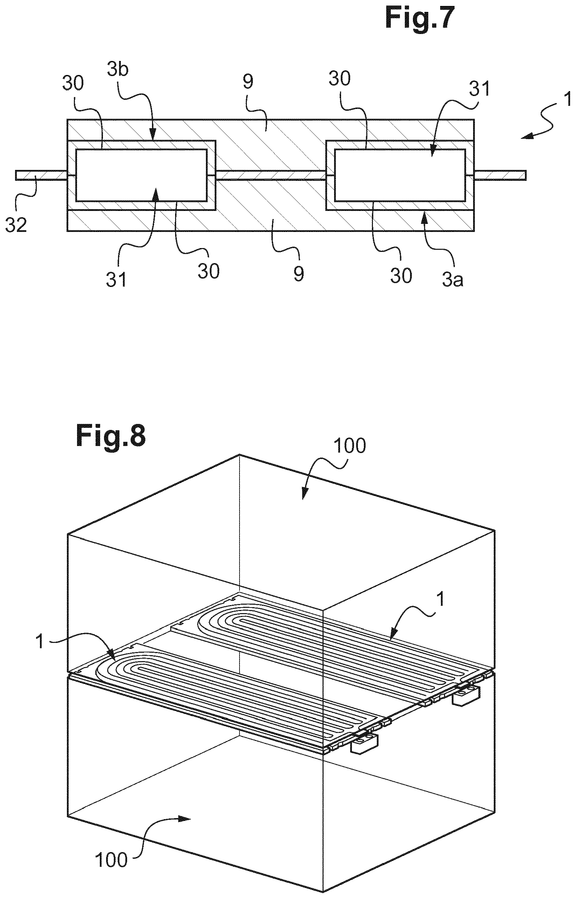

Comme le montre les figures 1 à 4 et la figure 6, la plaque d'échange thermique 1 pour la gestion thermique de pack batteries 100, comporte une première 3a et une seconde 3b plaque. Au moins une des première 3a ou seconde 3b plaque comportant des canaux 30 (visibles sur la figure 7). Les première 3a et seconde 3b plaques peuvent être notamment réalisées en métal, les canaux 30 peuvent alors être réalisés par emboutissage. Les première 3a et seconde 3b plaques sont accolées de sorte que les canaux 30 délimitent un conduit 31 d'un circuit de circulation d'un fluide caloporteur. De préférence le conduit est de forme en U et s'étend entre une entrée et une sortie de fluide caloporteur formées respectivement par des tubulures 5 de connexion. Cet accolement peut notamment être réalisé par brasage lorsque les plaques 3a, 3b sont métallique. Les zones de contact forment alors des zones de brasure 32 (voir figure 7).

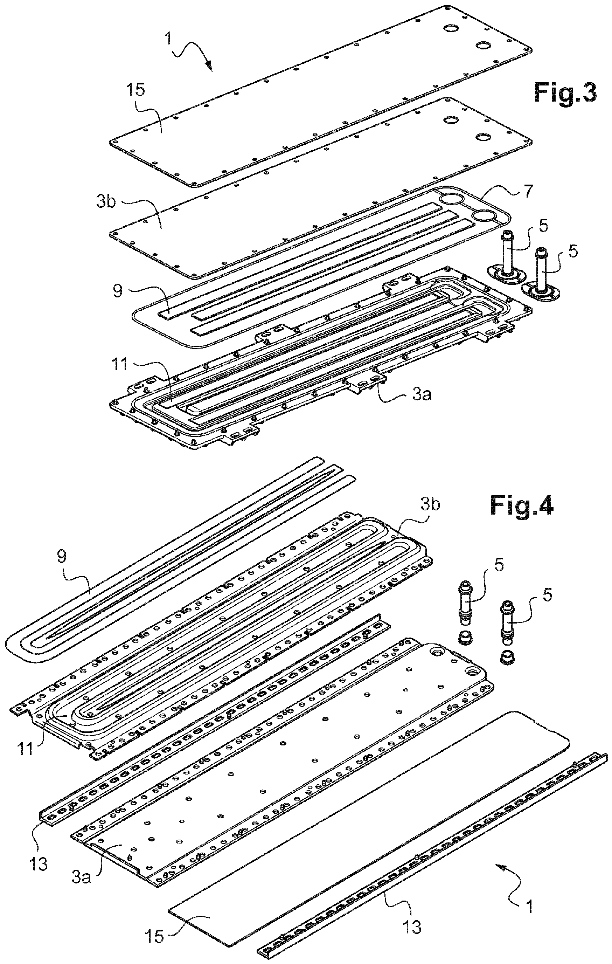

La plaque d'échange thermique 1 peut également comporter des éléments de maintien 13 (voir figures 4 et 2) permettant la fixation de la dite plaque d'échange au pack batteries ou à la batterie. La plaque d'échange thermique 1 peut en outre comporter un joint 7 (voir figures 1 et 3) placé entre la première 3a et la seconde 3b plaque afin d'assurer l'étanchéité entre ces dernières.

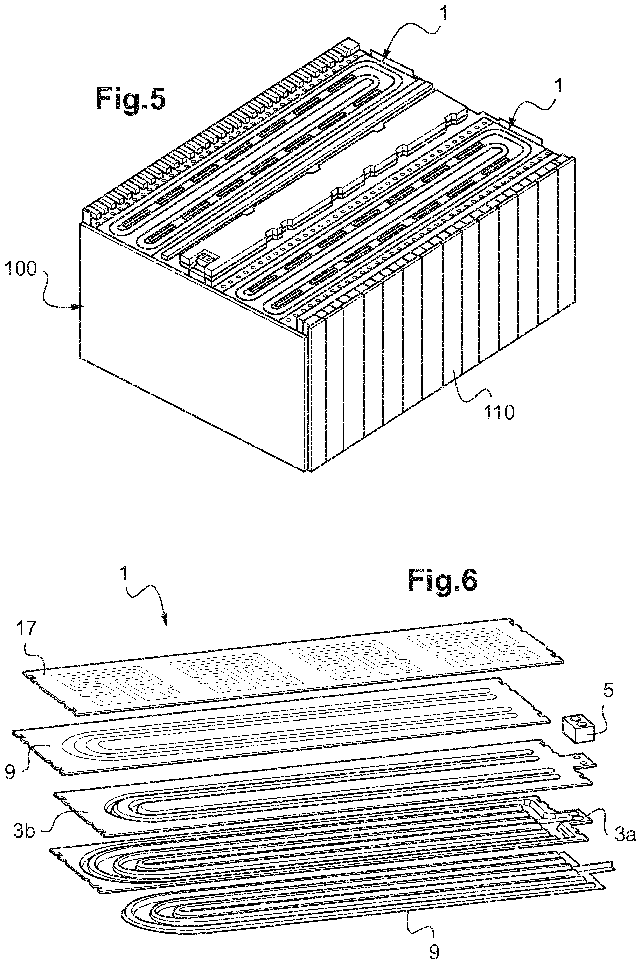

Par pack batteries 100 on entend un ensemble de cellules 110 reliées électriquement entre elles et formant ledit pack batteries 100 comme illustré sur la figure 5, ou alors une batterie simple de grande dimension.

La plaque d'échange thermique 1 comporte en outre au moins un matériau à changement de phase composite 9. Ce matériau à changement de phase composite 9 permet d'augmenter l'inertie thermique de la plaque d'échange thermique 1 et permet également d'améliorer l'homogénéité thermique entre l'entrée et la sortie de fluide 5. En effet, le différentiel de température entre l'entrée et la sortie de fluide en fonctionnement passe de 1.22°C pour une plaque d'échange thermique sans matériau à changement de phase composite 9 à 0.67°C pour une plaque d'échange thermique 1 avec matériau à changement de phase composite 9. Cela permet ainsi une meilleure gestion thermique du pack batteries 100.

Le matériau à changement de phase composite 9 est plus particulièrement composé d'un matériau à changement de phase intégré dans une matrice. Le matériau à changement de phase peut être choisi par exemple parmi les matériaux à changement de phase organique, inorganique ou encore d'origine végétale, ayant une température de changement de phase comprise entre 20 et 40° C. La matrice peut quant à elle être une matrice polymère ou encore en graphite expansé.

Au moins un matériau à changement de phase composite 9 peut être en partie placé dans au moins un logement 11 situé dans au moins l'une des première 3a et seconde 3b plaques comme illustré sur les figures 1 et 3. Les logements 11 peuvent être placés au sein même des canaux 30 ou alors entre ces derniers.

Au moins un matériau à changement de phase composite 9 peut en outre être placé sur au moins une face extérieure de la plaque d'échange thermique 1, comme illustré sur les figures 2, 4, 6 et 7. Ces matériaux à changement de phase composite 9 peuvent être placés dans des logements spécifiques sur une face extérieure de la plaque d'échange thermique.

Comme montré sur la figure 7, ils peuvent être de forme sensiblement complémentaire à un logement dédié et formé par emboutissages de ladite plaque d'échange thermique 1 de sorte qu'une fois le matériau à changement de phase composite 9 logé dans ledit logement dédié, la surface extérieure de la plaque est approximativement plane ce qui améliore la surface de contact avec le pack de batterie 100.

La plaque d'échange thermique 1 peut être placée au contact d'un seul pack batteries 100 comme cela est montré sur la figure 5. Elle peut à contrario être au contact d'un premier pack batteries 100 sur une première de ses faces et au contact d'un second pack batteries 100 sa seconde face, comme montré sur la figure 8. Dans ce dernier cas, les deux faces de la plaque d'échange thermique 1 sont utilisées pour réguler les packs batteries 100, limitant ainsi les pertes.

Comme le montre les figures 3 et 4, la plaque d'échange thermique 1 peut comporter un revêtement isolant 15 sur la face d'une des première 3a ou seconde 3b plaque ne venant pas au contact du pack batteries 100. Ce revêtement isolant 15 permet d'améliorer les échanges thermiques entre la plaque d'échange thermique 1 et le pack batteries 100 en limitant les échanges thermique sur la face opposée.

Le revêtement isolant 15 peut être un traitement de surface isolant appliqué sur la face extérieure de la plaque n'étant pas au contact du pack batteries 100, ou alors une plaque en matériau isolant accolée à la face extérieure de la plaque n'étant pas au contact du pack batteries 100.

Comme le montre la figure 6, la plaque d'échange thermique 1 peut comporter un dispositif de chauffage additionnel 17 du pack batteries 100. Ce dispositif de chauffage additionnel 17 est particulièrement utile pour réchauffer le pack batteries 100 afin qu'il se maintienne ou atteigne plus rapidement sa température de fonctionnement optimal.

Ce dispositif de chauffage additionnel 17 peut par exemple être un dispositif électrique à résistance sérigraphiée. Un matériau à changement de phase composite 9 peut être placé entre une des première 3a ou seconde 3b plaques et le dispositif de chauffage additionnel 17 du pack batteries 100, comme le montre la figure 6. Cependant, il est tout à fait possible d'imaginer une plaque d'échange thermique 1 où le dispositif de chauffage additionnel 17 est intégré entre la première 3a et la seconde 3b plaque.

Ainsi, on voit bien que la présence du matériau à changement de phase composite 9 au sein de la plaque d'échange thermique permet une meilleure gestion de la température du pack batteries.

## Revendications

1. Plaque d'échange thermique (1) pour gestion thermique de pack batteries (100), comportant des première (3a) et seconde (3b) plaques, au moins une des première (3a) et seconde (3b) plaque comportant au moins un canal (30), les première (3a) et seconde (3b) plaques étant accolées de sorte que ledit canal (30) délimite en partie au moins un conduit (31) d'un circuit de circulation d'un fluide caloporteur, **caractérisé en ce que** ladite plaque d'échange thermique (1) comporte en outre au moins un matériau à changement de phase composite (9).

2. Plaque d'échange thermique (1) selon la revendication 1, **caractérisée en ce qu'**au moins un matériau à changement de phase composite (9) est en partie placé dans au moins un logement (11) situé dans au moins l'une des première (3a) et seconde (3b) plaques.

3. Plaque d'échange thermique (1) selon la revendication 1, **caractérisée en ce que** le matériau à changement de phase composite (9) est placé sur au moins une face extérieure de ladite plaque d'échange thermique (1).

4. Plaque d'échange thermique (1) selon la revendication précédente, **caractérisée en ce que** le matériau à changement de phase composite (9) est de forme sensiblement complémentaire à un logement dédié et formé par emboutissage de ladite plaque d'échange thermique (1) de sorte qu'une fois le matériau à changement de phase composite (9) logé dans ledit logement dédié, la surface extérieure de la plaque est approximativement plane.

5. Plaque d'échange thermique (1) selon l'une des revendications précédentes, **caractérisée en ce que** ladite plaque d'échange thermique (1) comporte en outre un dispositif de chauffage additionnel (17) du pack batteries (100).

6. Plaque d'échange thermique (1) selon la revendication précédente, **caractérisée en ce que** le dispositif de chauffage additionnel (17) du pack batteries (100) est un dispositif électrique à résistance sérigraphiée.

7. Plaque d'échange thermique (1) selon l'une des revendications 5 ou 6, **caractérisée en ce que** le matériau à changement de phase composite (9) est placé entre une des première (3a) ou seconde (3b) plaques et le dispositif de chauffage additionnel (17) du pack batteries (100).

8. Plaque d'échange thermique (1) selon l'une des revendications précédentes, **caractérisée en ce que** l'une d'entre les première (3a) et seconde (3b) plaques est destinée à venir en contact du pack batteries (100) et que l'autre d'entre les première (3a) et seconde (3b) plaques comporte sur sa face extérieure un revêtement isolant (15).

9. Plaque d'échange thermique (1) selon la revendication 8, **caractérisée en ce que** le revêtement isolant (15) est une plaque en matériau isolant accolée à la face extérieure de la plaque n'étant pas au contact du pack batteries (100).

10. Plaque d'échange thermique (1) selon la revendication 8, **caractérisée en ce que** le revêtement isolant (15) est un traitement de surface isolant appliqué sur la face extérieure de la plaque n'étant pas au contact du pack batteries (100).

11. Pack batteries (100) **caractérisé en ce qu'**il comporte au moins une plaque d'échange thermique (1) selon une des revendications 1 à 10.

12. Ensemble de packs batterie (100) comportant au moins une plaque d'échange thermique (1) selon une des revendications 1 à 7, **caractérisé en ce que** ladite au moins une plaque d'échange thermique (1) est au contact avec un premier pack batteries (100) sur une première face et au contact avec un second pack batteries (100) sur une seconde face.

## Patentansprüche

1. Wärmeaustauschplatte (1) für das Wärmemanagement eines Batteriepacks (100), die erste (3a) und zweite Platten (3b) aufweist, wobei mindestens eine der ersten (3a) und zweiten Platten (3b) mindestens einen Kanal (30) aufweist, wobei die ersten (3a) und zweiten Platten (3b) so aneinandergefügt sind, dass der Kanal (30) zumindest zum Teil eine Leitung (31) eines Durchflusskreises eines Wärmeträgerfluids begrenzt, **dadurch gekennzeichnet, dass** die Wärmeaustauschplatte (1) außerdem mindestens ein Phasenwechsel-Verbundmaterial (9) aufweist.

2. Wärmeaustauschplatte (1) nach Anspruch 1, **dadurch gekennzeichnet, dass** mindestens ein Phasenwechsel-Verbundmaterial (9) zum Teil in mindestens einer Aufnahme (11) angeordnet ist, die sich in mindestens einer der ersten (3a) und zweiten Platten (3b) befindet.

3. Wärmeaustauschplatte (1) nach Anspruch 1, **dadurch gekennzeichnet, dass** das Phasenwechsel-Verbundmaterial (9) auf mindestens einer Außenseite der Wärmeaustauschplatte (1) angeordnet ist.

4. Wärmeaustauschplatte (1) nach dem vorhergehenden Anspruch, **dadurch gekennzeichnet, dass** das Phasenwechsel-Verbundmaterial (9) eine Form im Wesentlichen komplementär zu einer zugeordneten Aufnahme hat, die durch Tiefziehen der Wärmeaustauschplatte (1) geformt wird, so dass, wenn das Phasenwechsel-Verbundmaterial (9) in der zugeordneten Aufnahme untergebracht ist, die Außenfläche der Platte in etwa eben ist.

5. Wärmeaustauschplatte (1) nach einem der vorhergehenden Ansprüche, **dadurch gekennzeichnet, dass** die Wärmeaustauschplatte (1) außerdem eine zusätzliche Heizvorrichtung (17) des Batteriepacks (100) aufweist.

6. Wärmeaustauschplatte (1) nach dem vorhergehenden Anspruch, **dadurch gekennzeichnet, dass** die zusätzliche Heizvorrichtung (17) des Batteriepacks (100) eine elektrische Vorrichtung mit Siebdruck-Widerstand ist.

7. Wärmeaustauschplatte (1) nach einem der Ansprüche 5 oder 6, **dadurch gekennzeichnet, dass** das Phasenwechsel-Verbundmaterial (9) zwischen einer der ersten (3a) oder zweiten Platten (3b) und der zusätzlichen Heizvorrichtung (17) des Batteriepacks (100) angeordnet ist.

8. Wärmeaustauschplatte (1) nach einem der vorhergehenden Ansprüche, **dadurch gekennzeichnet, dass** eine der ersten (3a) und zweiten Platten (3b) dazu bestimmt ist, mit dem Batteriepack (100) in Kontakt zu kommen, und dass die andere der ersten (3a) und zweiten Platten (3b) auf ihrer Außenseite eine Isolierverkleidung (15) aufweist.

9. Wärmeaustauschplatte (1) nach Anspruch 8, **dadurch gekennzeichnet, dass** die Isolierverkleidung (15) eine Platte aus Isoliermaterial ist, die an die Außenseite der Platte angefügt ist, die nicht mit dem Batteriepack (100) in Kontakt ist.

10. Wärmeaustauschplatte (1) nach Anspruch 8, **dadurch gekennzeichnet, dass** die Isolierverkleidung (15) eine isolierende Oberflächenbehandlung ist, die auf die Außenseite der Platte angewendet wird, die nicht mit dem Batteriepack (100) in Kontakt ist.

11. Batteriepack (100), **dadurch gekennzeichnet, dass** er mindestens eine Wärmeaustauschplatte (1) nach einem der Ansprüche 1 bis 10 aufweist.

12. Gruppe von Batteriepacks (100), die mindestens eine Wärmeaustauschplatte (1) nach einem der Ansprüche 1 bis 7 aufweist, **dadurch gekennzeichnet, dass** die mindestens eine Wärmeaustauschplatte (1) mit einem ersten Batteriepack (100) auf einer ersten Seite und mit einem zweiten Batteriepack (100) auf einer zweiten Seite in Kontakt ist.

## Claims

1. Heat exchange plate (1) for thermal management of a battery pack (100), comprising first (3a) and second (3b) plates, at least one of the first (3a) and second (3b) plates comprising at least one channel (30), the first (3a) and second (3b) plates being attached such that said channel (30) partly delimits at least one duct (31) of a circulation circuit for a heat transfer fluid, **characterized in that** said heat exchange plate (1) further comprises at least one composite phase change material (9).

2. Heat exchange plate (1) according to Claim 1, **characterized in that** at least one composite phase change material (9) is partly placed in at least one housing (11) situated in at least one of the first (3a) and second (3b) plates.

3. Heat exchange plate (1) according to Claim 1, **characterized in that** the composite phase change material (9) is placed on at least one outer face of said heat exchange plate (1).

4. Heat exchange plate (1) according to the preceding claim, **characterized in that** the composite phase change material (9) is of a form substantially complementing a dedicated housing formed by stamping said heat exchange plate (1) such that, once the composite phase change material (9) is housed in said dedicated housing, the outer face of the plate is approximately planar.

5. Heat exchange plate (1) according to one of the preceding claims, **characterized in that** said heat exchange plate (1) further comprises an additional heating device (17) for the battery pack (100).

6. Heat exchange plate (1) according to the preceding claim, **characterized in that** the additional heating device (17) for the battery pack (100) is an electrical device with screen printed resistor.

7. Heat exchange plate (1) according to either of Claims 5 and 6, **characterized in that** the composite phase change material (9) is placed between one of the first (3a) or second (3b) plates and the additional heating device (17) for the battery pack (100).

8. Heat exchange plate (1) according to one of the preceding claims, **characterized in that** one of the first (3a) and second (3b) plates is intended to come into contact with the battery pack (100) and the other of the first (3a) and second (3b) plates comprises, on its outer face, an insulating cover (15).

9. Heat exchange plate (1) according to Claim 8, **characterized in that** the insulating cover (15) is a plate of insulating material attached to the outer face of the plate that is not in contact with the battery pack (100).

10. Heat exchange plate (1) according to Claim 8, **characterized in that** the insulating cover (15) is an insulating surface treatment applied to the outer face of the plate that is not in contact with the battery pack (100).

11. Battery pack (100), **characterized in that** it comprises at least one heat exchange plate (1) according to one of Claims 1 to 10.

12. Set of battery packs (100) comprising at least one heat exchange plate (1) according to one of Claims 1 to 7, **characterized in that** said at least one heat exchange plate (1) is in contact with a first battery pack (100) on a first face and in contact with a second battery pack (100) on a second face.
